# EUROPEAN PATENT APPLICATION

(11) **EP 2 562 399 A1**
(43) Date of publication of application: **27.02.2013**
(21) Application number: 11178970.7
(22) Date of filing: 26.08.2011
(51) Int. Cl.: F02D 19/06, F02D 19/10, F02D 41/40

(54) **Pilot injection of dual fuel engines**

(71) Applicant: Caterpillar Motoren GmbH & Co. KG, 24159 Kiel (DE)
(72) Inventor: Haas, Stefan, 24107 Quarnbek / OT Flemhude (DE); Nagel, Jürgen, 24214 Gettorf (DE)
(74) Representative: Kramer - Barske - Schmidtchen

(57) **Abstract**

A dual fuel engine (10) for operation in a liquid fuel mode and in a gaseous fuel mode comprises at least one cylinder unit comprising a cylinder (12) with a combustion chamber (13), a main fuel injector (30), and a pilot fuel injector (42); and a control unit (50) for controlling at least one of the main fuel injector (30) and the pilot fuel injector (42), wherein the control unit (50) is configured to, in the gaseous fuel mode, control the pilot fuel injector (42) to perform a pilot injection for initiating the combustion process and to, in the liquid fuel mode, control the pilot fuel injector (42) to perform a shifted-pilot injection. Moreover, a method for operating a dual fuel engine (10) is disclosed that comprises performing a shifted-pilot injection with the pilot injector also in the liquid fuel mode.

## Description

### Technical Field

The present invention relates generally to dual fuel engines, and more specifically to dual fuel engines with pilot injection systems.

### Background

Dual fuel engines are capable of running on gaseous fuel or liquid fuel or a combination of both, thereby allowing fulfilling increased emission standards. Herein, a dual fuel engine running on liquid fuel (e.g. diesel fuel, light fuel oil (LFO), and heavy fuel oil (HFO), alternative fuels such as pyrolysis oil) is referred to as running in the liquid fuel mode (LFM) and a dual fuel engine running on gaseous fuel (e.g. natural gas or biogas) is referred to as running in the gaseous fuel mode (GFM). Exemplary fields of applying dual fuel engines include the global marine industry and power generation systems.

Used for internal combustion engines, natural gas has several advantages over other hydrocarbon fuels. The advantages include, for example, reduced costs and cleaner burning during operation of the internal combustion engine relative to other hydrocarbon fuels. By burning cleaner, a reduced amount of combustion byproducts such as carbon monoxide, oxides of nitrogen or hydrocarbons are released into the environment during operation of the internal combustion engine. In marine applications, dual fuel engines may be operated external to emission controlled areas with (less expensive) HFO in LFM despite the reduced efficiency.

Dual fuel types of internal combustion engines are usually based on diesel engines. The cycle of, e.g., a four stroke Diesel engine comprises the intake stroke, the compression stroke, the power stroke, and the exhaust stroke.

In LFM, dual fuel engines may operate like diesel engines, e.g. dual fuel engines combust liquid fuel by compressing a mixture of air and fuel (compression stroke) to a point where the liquid fuel is ignited by the heating which accompanies the compression.

In GFM, the gas-air mixture does not readily ignite when it is compressed during the compression stroke. Different types of dual fuel engines were developed to overcome this problem.

In some types of dual fuel engines, the ignition source may be provided by a spark plug similar to those used in spark ignition engines to trigger the power stroke.

In other types of dual fuel engines, the ignition source is provided by injecting a small amount of igniting liquid fuel (e.g. diesel fuel) with a pilot fuel injector into the compressed mixture of air and natural gas at the end of the compression stroke and/or the beginning of the power stroke (herein referred to as pre-combustion timing). Within the compressed mixture of air, natural gas, and igniting liquid fuel, the igniting liquid fuel ignites, which in turn ignites the natural gas for the combustion process during the power stroke.

The present disclosure is directed, at least in part, to improving or overcoming one or more aspects of prior systems.

### Summary of the Disclosure

According to a first aspect of the present disclosure, a method for operating a dual fuel engine configured for operation in a liquid fuel mode and for operation in a gaseous fuel mode and having a pilot injector for initiating the combustion process of the gaseous fuel mode may comprise performing a shifted-pilot injection with the pilot injector also in the liquid fuel mode.

According to a further aspect of the present disclosure, a method for operating a dual fuel engine configured for operation in a liquid fuel mode and for operation in a gaseous fuel mode and having a pilot injector for initiating the combustion process of the gaseous fuel mode may comprise cleaning the pilot injector during operation of the dual fuel engine in the liquid fuel mode by performing a switched-pilot injection that begins at the end or after a main liquid fuel injection.

According to a further aspect of the present disclosure, a dual fuel engine for operation in a liquid fuel mode and in a gaseous fuel mode may comprise at least one cylinder unit comprising a cylinder with a combustion chamber, a main fuel injector, and a pilot fuel injector; and a control unit for controlling at least one of the main fuel injector, and the pilot fuel injector, wherein the control unit is configured to, in the gaseous fuel mode, control the pilot fuel injector to perform a pilot injection for initiating the combustion process and to, in the liquid fuel mode, control the pilot fuel injector to perform a shifted-pilot injection.

Implementations may include one or more of the following features.

In some embodiments, the shifted-pilot injection may be performed at a crank angle of between 30° and 180° after top dead centre (TDC), e.g. between 30° and 45° after top dead centre (TDC). In some embodiments, the shifted-pilot injection may be performed during an intake stroke of the liquid fuel mode.

In some embodiments, operating the dual fuel engine in the liquid fuel mode may comprise performing a liquid fuel injection during an intake stroke of the liquid fuel mode; and performing the shifted-pilot injection at the end of or following the liquid fuel injection of the intake stroke.

In some embodiments, the shifted-pilot injection may be performed during a compression stroke of the liquid fuel mode, e.g. at the beginning of the compression stroke.

In some embodiments, operating the dual fuel engine in liquid fuel mode may further comprise , when changing between the gaseous fuel mode and the liquid fuel mode, a timing of the operation of the pilot injection system may be switched from pre-combustion timing at the beginning of the power stroke during the gaseous fuel mode to a post-liquid fuel injection timing during liquid fuel mode and vice versa.

In some embodiments, the methods may further comprise controlling the pilot injection system via a common rail system; and/or measuring parameter values of the exhaust gas and controlling the shifted-pilot injection via the common rail system based on the measured parameter values.

In some embodiments, a dual fuel engine may comprise at least one cylinder unit comprising a cylinder with a combustion chamber, an intake valve, an exhaust valve, a main fuel injector, and a pilot fuel injector.

In some embodiments, a dual fuel engine may comprise an air intake system comprising an intake manifold, a gas supply system, and a gas valve, the air intake system fluidly connectable to the combustion chamber via the intake valve.

In some embodiments, a dual fuel engine may comprise an exhaust system fluidly connectable to the combustion chamber via the exhaust valve.

The details of several embodiments of the invention are set forth in the accompanying drawings and the description below. Other aspects, features, obj ects, and advantages of the invention will be apparent from the following description and accompanying drawings, and from the claims.

### Brief Description of the Drawings

Fig. 1 is a schematic cut view of a cylinder unit of a dual fuel engine.
Fig. 2 is a timing diagram illustrating the timing of a pilot injection performed in a gaseous fuel mode of a dual fuel engine.
Fig. 3 is a timing diagram illustrating the timing of a shifted-pilot injection performed in a liquid fuel mode of a dual fuel engine.

### Detailed Description

The following is a detailed description of exemplary embodiments of the present disclosure. The exemplary embodiments described therein and illustrated in the drawings are intended to teach the principles of the present disclosure, enabling those of ordinary skill in the art to implement and use the present disclosure in many different environments and for many different applications. Therefore, the exemplary embodiments are not intended to be, and should not be considered as, a limiting description of the scope of patent protection. Rather, the scope of patent protection shall be defined by the appended claims.

The disclosure is based on the realization that, when an engine is run in LFM, the pilot injection system required for the operation in a gaseous fuel mode may be affected by the combustion process. For example, combustion deposits may form on the pilot injector of the pilot injection system. Those combustion deposits may then affect the pilot injection when it is applied again afterwards in GFM. It was realized that to avoid or at least reduce those deposits, the pilot injection system may be operated even when it is not required for the combustion process, e.g. when the engine is operated in LFM.

The disclosure is further based on the realization that an operation of the pilot injection system during LFM may affect the fuel combustion process. For example, performing the pilot injection at the same time or at a similar time in LFM as it is performed in GFM may cause smoking. This may, for example, be the case when in LFM the pilot injection is maintained at the start of the combustion process as it may be done in GFM. Moreover, performing the pilot injection close to the main injection may result in spray disturbances and, thereby, also affect the combustion process.

The herein disclosed shifted-pilot injection during LFM, e.g., applying a shifted-pilot injection following the liquid fuel injection and prior to the combustion process, may avoid those effects on the combustion process. Herein, an injection performed with the pilot fuel injector during LFM is referred to as a shifted-pilot fuel injection or shifted-pilot injection.

Moreover, using an electronic common rail system for controlling the pilot injection system may allow changing the timing of the pilot injection in dependence of the operation mode, i.e. LFM or GFM. Specifically, using an electronic common rail system, the shifted-pilot injection may be performed at a timing that may avoid the formation of deposits on the pilot injector during liquid fuel mode and at the same time may not cause or at least reduce disadvantageous or adverse effects on the combustion process of LFM. Using an electronic common rail system may further allow the timing of the shifted-pilot injection to be shifted to a position that may provide improved exhaust parameter values. For example, the timing of the shifted-pilot injection during LFM may be specifically controlled based on measured exhaust parameter values, e.g. in a feedback control system.

In addition, in some embodiments, performing shifted-pilot injections during LFM may provide additional cooling of the pilot injector during LFM. This may increase lifetime. In some embodiments, performing shifted-pilot injections during LFM may allow reduced performance of the cooling system within the pilot injection system, thereby, for example, reducing the size or complexity of the pilot injection systems.

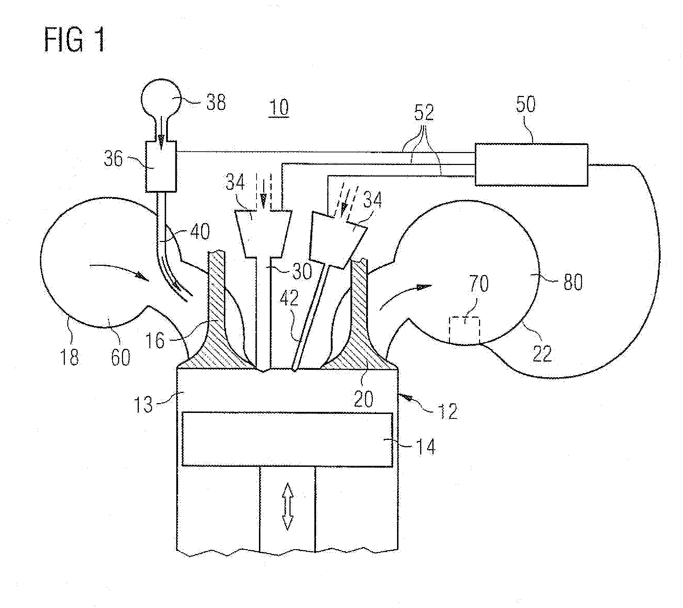

Fig. 1 shows a schematic cut view of a cylinder unit of a dual fuel engine 10. Dual fuel engine 10 may comprise, for example, 12, 16 or more cylinder units. Each of the cylinder units may comprise a cylinder 12 that together with a piston 14 may delimit a combustion chamber 13. An intake valve 16 may fluidly connect an inlet manifold 18 with combustion chamber 13. An exhaust valve 20 may further fluidly connect combustion chamber 13 with an outlet manifold 22.

A liquid fuel system comprising inter alia a main fuel injector 30 may be provided for injection liquid fuel into combustion chamber 13 during operation of dual fuel engine 10 in LFM. The liquid fuel system, and in particular main fuel injector 30, may be controlled via a common rail system 34.

A gas fuel system may include a gas valve 36 fluidly connecting a gas supply system 38 with a gas inlet pipe 40. Gas inlet pipe 40 may comprise an opening for releasing gas into the fluid connection between inlet manifold 18 and combustion chamber 13 upstream of intake valve 16.

The gas fuel system may further include a pilot fuel injector system including a pilot fuel injector 42. Also pilot fuel injector 42 may be controlled via common rail system 34.

As shown in Fig. 1, a control system 50 may be connected via control lines 52 with gas valve 36, main fuel injector 30, and pilot fuel injector 42. In GFM, control system 50 may be configured for controlling the opening times of gas valve 36, thereby controlling the amount of gas to be mixed with intake air 60 streaming from inlet manifold 18 into combustion chamber 13 while intake valve 16 is opened.

In LFM, control system 50 may further be configured to control the amount of liquid fuel injected by main fuel injector 30 into combustion chamber 13.

In LFM and GFM, control system 50 may furthermore control the timing of the injection of liquid fuel or gas with respect to the movement of piston 14 and the opening times of intake valve 16 and exhaust valve 20.

In GFM, control system 50 may further be configured to control the amount of pilot fuel injected into combustion chamber 13 after (or at the end of) the compression stroke prior to the combustion process via pilot fuel injector 42.

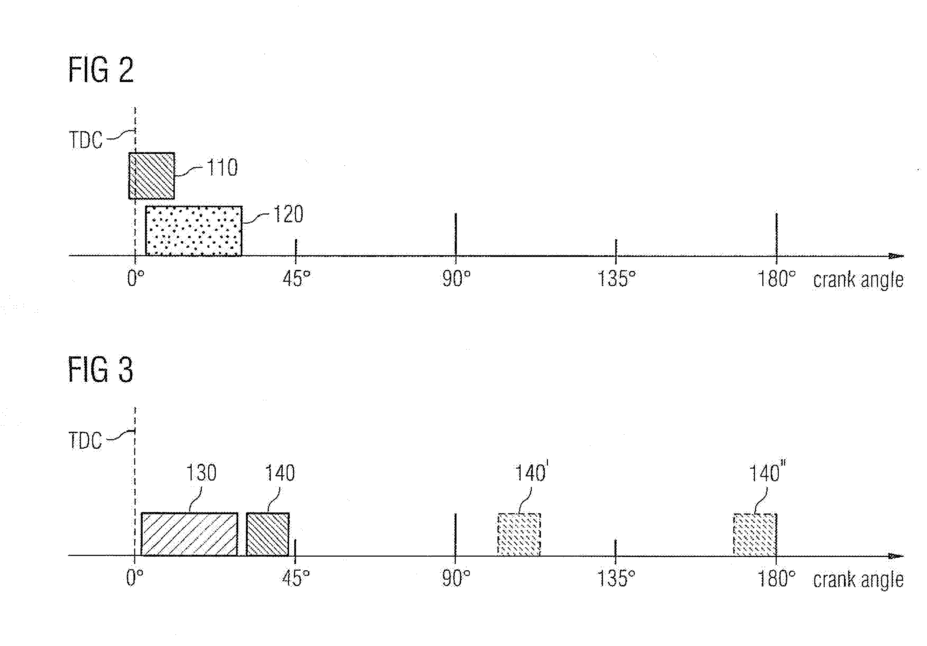

In LFM, control system 50 may further be configured to control the operation of the pilot fuel injector system. For example, control system 50 may be configured to control an injection of pilot fuel injector 42. Specifically, control system 50 may control the amount and timing of the shifted-pilot injection performed during LFM as explained in detail below in connection with Figs. 2 and 3.

The shifted-pilot injection may be controlled in dependence of operating parameters of dual fuel engine 10, including input parameters (e.g. requested performance) as well as output parameters (e.g. measured parameter values of exhaust gas 80).

In some embodiments, dual fuel engine 10 may further comprise one or more exhaust sensors mounted within the exhaust system of dual fuel engine 10. In general, each cylinder unit may comprise one or more exhaust sensors

As exemplary shown in Fig. 1, an exhaust sensor 70 may be positioned within outlet manifold 18 e.g. next to the fluid connection between combustion chamber 13 and outlet manifold 22. In addition or alternatively, an exhaust sensor may be positioned within the fluid connection between combustion chamber 13 and outlet manifold 22. Exhaust senor 70 may be connected to control system 50 via sensor lines 72.

Exhaust sensor 70 may be configured to determine parameters characterizing the quality of the combustion process. For example, exhaust sensor 70 may be configured for measuring physical and/or chemical parameters of exhaust gas 80, e.g. the temperature, the humidity, the amount of combustion byproducts such as carbon monoxide, oxides of nitrogen or hydrocarbons or sooth.

### Industrial Applicability

In the following, an exemplary operation of a dual fuel engine is described with reference to Figs. 2 and 3. Figs. 2 and 3 illustrate the timing with respect to the crank angle. A crank angle of 0° indicates a piston position at top dead center (TDC) and a crank angle of 180° indicates a piston position at bottom dead center (BDC). A four-stroke engine performs its four strokes (intake, compression, power, and exhaust stroke) during two succeeding revolutions of the engine's crankshaft. It is noted that Fig. 2 relates to the third (power) stroke, while Fig. 3 relates to the first (intake) stroke of the two succeeding revolutions.

As an example, the following description refers to the components provided in the exemplary dual fuel engine 10 of Fig. 1. As will be known by the person skilled in the art, also different types of cylinder unit configurations may be used to implement the disclosed concept.

Fig. 2 illustrates the timing of a pilot ignition injection 110 with respect to a gas combustion process 120 that takes place during the power stroke of GFM.

In GFM, an air-gas mixture may be generated from (e.g. compressed) intake air 60 provided via inlet manifold 18 and gas provided by gas supply system 38 of the gaseous fuel system. The air-gas mixture may be provided into combustion chamber 13 through intake valve 16 while piston 14 descends from TDC. During the following compression stroke, the air-gas mixture may be compressed until piston 14 reaches TDC. At that time, or shortly prior to TDC, pilot ignition injection 110 may be performed to ignite gas combustion process 120 during GFM.

In GFM, the pilot fuel itself may ignite due to the high temperature caused by the compression of the air-gas mixture within the diesel engine compression stroke. Usually, the pilot injection system may be controlled via an electronicalinjection control system, e.g. the amount of pilot fuel, the pressure of the pilot fuel, and the timing of the pilot fuel injection may be adaptable within pre-set ranges.

In GFM, the combustion may be temporally limited to, for example, the first quarter of the power stroke. During the following exhaust stroke, piston 14 may force the exhaust gas 80 through exhaust valve 20 and into outlet manifold 22.

In LFM, liquid fuel, such as diesel, HFO or pyrolysis oil, may be injected into combustion chamber 13 by main fuel injector 30 during the intake stroke. The injector nozzle may be configured to provide a specific injection profile, thereby allowing a mix of the liquid fuel with the (compressed) intake air 60 provided through intake valve 16 from inlet manifold 18.

As shown in Fig. 3, liquid fuel injection 130 may be performed shortly after TDC and take place, for example, until a crank angle of about 30°.

Shortly after the end of liquid fuel injection 130, a shifted-pilot injection 140 may be performed, e.g., initiated by control system 50. As shown in Fig. 3, shifted-pilot injection 140 may end, for example, at a crank angle of about 45°. The length (angular range) of the shifted-pilot injection may affect the cleaning and/or cooling effects of the shifted-pilot injection and may be adapted accordingly to the type of liquid fuel used as the amount of deposits and the combustion temperature may differ for different fuels.

Performing shifted-pilot injection 140 not to overlap or only to overlap shortly with liquid fuel injection 130 may avoid or reduce any effects of the shifted-pilot injection process onto the physical features of liquid fuel injection 130, e.g. the distribution of the liquid fuel in combustion chamber 13.

Shifted-pilot injection 140 may be performed at different crank angles of the intake stroke or the compression stroke such that the performance of the liquid fuel mode may be differently affected. As exemplary alternative timings during the intake stroke, Fig. 3 shows a second shifted-pilot injection 140' beginning at a crank angle of about 100° and a third shifted-pilot injection 140" ending at a crank angle of about 180° (i.e. bottom dead center).

Performing a shifted-pilot injection during LFM may avoid or at least reduce any formation of deposits on pilot fuel injector 42, specifically its tip reaching into combustion chamber 13 and/or cool pilot fuel injector 42 additionally during LFM. Thereby, when switching back to GFM, pilot fuel injector 42 may from the beginning be ready for proper operation without being affected by, for example, combustion deposits.

The specific timing of shifted-pilot injections may be further controlled for optimization of the combustion process. For example, the shifted-pilot injection may act as a post-inj ection thereby forming/controlling the combustion process in a specific manner as it is known from general post-inj ection applications.

In some embodiments, exhaust sensor 70 for measuring parameters of exhaust gas 80 may provide information to control system 50 that the combustion process is not within a preferred parameter range. Control system 50 may perform an analysis of the measured parameter values. Control system 50 may then cause a shift of the shifted-pilot injection, e.g. initiate a shifted-pilot injection at a different crank angle. For example, shifted-pilot injection 140' shown in Fig.3 may be performed at a crank angle of 100° during intake stroke.

Alternatively or additionally to an analysis based adaptation of the timing of the shifted-pilot injection in LFM, control system 50 may perform a trial and error adaptation of the timing of shifted-pilot injection 140, thereby optimizing the combustion process via shifted-pilot injection of pilot fuel injector 42, e.g. in real time.

LFM may usually be based on a main injector system for injecting the required amounts of liquid fuel. The amount of injected liquid fuel may be several times larger than the amount of liquid pilot fuel injected in GFM. For example, the amount of pilot-injection in GFM may be 0.5-1 % of the amount of diesel fuel injected in full load operation. Providing injection of such an amount also during LFM will provide, for example, for the required cleaning. Therefore, the main fuel injector may usually be larger in dimensions then the pilot fuel injector.

Using the shifted-pilot injection during LFM as a post-injection may require an amount of pilot-injection of e.g. 10 % of the amount of diesel fuel injected in full load operation. Accordingly, the pilot fuel injector may need to be increased in dimensions.

Performing the shifted-pilot fuel injection during LFM may allow cooling of pilot fuel injector 42 also during LFM, thereby reducing the amount of internal cooling required for pilot fuel injector 42.

Moreover, operation of pilot fuel injector 42 during LFM may reduce or avoid choking of the nozzle of pilot fuel injector 42.

In view of the closeness of main fuel injector 30 and pilot fuel injector 42, operating those injectors at the same time may cause one injection system to affect the other. For example, the injection jets may be affected such that the fuel distribution of the liquid fuel may not be achieved in a manner that could have been achieved when main fuel injector 30 is operated without operating pilot fuel injector 42 at the same time. Thus, a non-overlapping activation of main fuel injector 30 in pilot injector 42 may allow maintaining the injection profiles of the injection jets and the fuel mixture as provided by main fuel injectors 30 according to its specifications.

Thus, running pilot fuel injections even during LFM may overcome disadvantages and/or provide an improved performance of dual fuel engines. In some embodiments, the shifted-pilot injection is performed following the liquid fuel injection (with or without a small overlap and with or without some injection free time interval there-between). Herein, this is referred to as post-liquid fuel injection timing.

Performing the shifted-pilot injection after liquid fuel injection but prior to or during the combustion process may further allow use of the combustion energy of the pilot fuel (in contrast to performing the shifted-pilot injection after the combustion process, as then the injected pilot fuel may be directly released with the exhaust gas).

Dual fuel engines as disclosed herein may in some embodiments be used with alternative fuels. Alternative fuels replacing fossil fuels are the subject of ongoing interest, in particular with respect to the replacement of, e.g., diesel fuel, light fuel oil (LFO), and heavy fuel oil (HFO). Alternative fuels include first generation biofuels (e.g. palm oil, canola oil, oils based on animal fat) and second generation biofuels (e.g. oils made of non food corps, i.e. waste biomass).

Examples of second generation biofuel include "pyrolysis oils" obtained from the pyrolysis of, e.g., wood or agricultural wastes, such as the stalks of wheat or corn, grass, wood, wood shavings, grapes, and sugar cane. In general, pyrolysis oil is predominantly produced by the "Fast Pyrolysis" technology, which comprises rapid pyrolysation of biomass in a fluidized bubbling sand bed reactor, wherein the solid heat-carrying medium is circulated and, therefore, the residence time of solids is well-controlled and high heating rates (up to 1000 °C/second) are obtained.

Herein, the term "internal combustion engine" may refer to internal combustion engines which may be used as main or auxiliary engines of stationary power providing systems such as power plants for production of heat and/or electricity as well as in ships/vessels such as cruise liners, cargo ships, container ships, and tankers.

In addition, the term "internal combustion engine" as used herein is not specifically restricted and comprises any engine, in which the combustion of a fuel occurs with an oxidizer to produce high temperature and pressure gases, which are directly applied to a movable component of the engine, such as pistons or turbine blades, and move it over a distance thereby generating mechanical energy. Thus, as used herein, the term "internal combustion engine" comprises piston engines and turbines, which can, for example, be operated with multiple fuels. Examples of such engines that are suitable for adaptation to multiple fuels include medium speed internal combustion diesel engines, like inline engines of the planned series M46DF and M32DF and their V-type counterparts manufactured by Caterpillar Motoren GmbH & Co. KG, Kiel, Germany, operated in a range of 500 to 1000 rpm.

In some embodiments, a dual fuel engine for operation in a liquid fuel mode and in a gaseous fuel mode may comprise at least one cylinder unit comprising a cylinder with a combustion chamber, an intake valve, an exhaust valve, a main fuel injector, and a pilot fuel injector; an air intake system comprising an intake manifold, a gas supply system, and a gas valve, the air intake system fluidly connectable to the combustion chamber via the intake valve; an exhaust system fluidly connectable to the combustion chamber via the exhaust valve; and a control unit for controlling at least one of the main fuel injector, the pilot fuel injector, and the gas valve. The control unit may then, for example, be configured to, in the gaseous fuel mode, control the pilot fuel injector to perform a pilot injection for initiating the combustion process and to, in the liquid fuel mode, control the pilot fuel injector to perform a shifted-pilot injection.

Although the preferred embodiments of this invention have been described herein, improvements and modifications may be incorporated without departing from the scope of the following claims.

## Claims

1. A method for operating a dual fuel engine (10) configured for operation in a liquid fuel mode and for operation in a gaseous fuel mode and having a pilot injector (42) for initiating the combustion process of the gaseous fuel mode, the method comprising:
performing a shifted-pilot injection (140) with the pilot injector (42) also in the liquid fuel mode.

2. The method of claim 1, wherein the shifted-pilot injection (140) is performed at a crank angle of between 30° and 180° after top dead centre (TDC), e.g. between 30° and 45° after top dead centre (TDC).

3. The method of claim 1 or 2, wherein the shifted-pilot injection (140) is performed during an intake stroke of the liquid fuel mode.

4. The method of any one of the preceding claims further comprising:
operating the dual fuel engine (10) in the liquid fuel mode, wherein operating the dual fuel engine (10) in the liquid fuel mode comprises
performing a main liquid fuel injection (130) during an intake stroke of the liquid fuel mode; and
performing the shifted-pilot injection (140) at the end of or following the liquid fuel injection (130) of the intake stroke.

5. The method of any one of the preceding claims, wherein the shifted-pilot injection (140) is performed during a compression stroke of the liquid fuel mode, e.g. at the beginning of the compression stroke.

6. The method of any one of the preceding claims further comprising:
operating the dual fuel engine (10) in liquid fuel mode;
operating the dual fuel engine (10) in gaseous fuel mode, and
wherein when changing between the gaseous fuel mode and the liquid fuel mode, a timing of the operation of the pilot injection system is switched from pre-combustion timing at the beginning of the power stroke during the gaseous fuel mode to a post-liquid fuel injection timing during liquid fuel mode and vice versa.

7. The method of any one of the preceding claims further comprising at least one of the following steps:
controlling the pilot injection system via a common rail system (34); and
measuring parameter values of the exhaust gas (80) and controlling the shifted-pilot injection (140) via the common rail system (34) based on the measured parameter values.

8. A dual fuel engine (10) for operation in a liquid fuel mode and in a gaseous fuel mode, the dual fuel engine comprising:
at least one cylinder unit comprising a cylinder (12) with a combustion chamber (13), a main fuel injector (30), and a pilot fuel injector (42); and
a control unit (50) for controlling at least one of the main fuel injector (30) and the pilot fuel injector (42),
wherein the control unit (50) is configured to, in the gaseous fuel mode, control the pilot fuel injector (42) to perform a pilot injection (110) for initiating the combustion process and to, in the liquid fuel mode, control the pilot fuel injector (42) to perform a shifted-pilot injection (140).

9. The dual fuel engine (10) of claim 8, wherein the control unit (50) is configured to, in the gaseous fuel mode, control the shifted-pilot injection (140) to be performed at a crank angle of between 30° and 180° after top dead centre (TDC), e.g. between 30° and 45° after top dead centre (TDC) of a piston (14) of the cylinder unit.

10. The dual fuel engine (10) of claim 8 or 9, wherein the control unit (50) is configured to, in the gaseous fuel mode, control the shifted-pilot injection (140) to be performed after the control unit (50) having controlled the main fuel injector (30) to supply liquid fuel to the combustion chamber (13).

11. The dual fuel engine (10) of any one of claims 8 to 10, wherein the control unit (50) is configured to, in the gaseous fuel mode, control the shifted-pilot injection to be performed during a compression stroke of the liquid fuel mode, e.g. at the beginning of the compression stroke.

12. The dual fuel engine (10) of any one of claims 8 to 11, wherein the control unit is configured to, when changing between the gaseous fuel mode and the liquid fuel mode, to control a timing of the operation of the pilot injector (42) to be switched between a pre-combustion timing at the beginning of the power stroke during the gaseous fuel mode and a post-liquid fuel injection timing during liquid fuel mode.

13. The dual fuel engine (10) of any one of claims 8 to 12, further comprising a common rail system (34) for operating the pilot injector (42) and/or the main injector (30).

14. The dual fuel engine (10) of any one of claims 8 to 13, further comprising an exhaust sensor (70) for measuring parameters of the exhaust gas (80) that characterize the quality of the combustion process and providing the measured parameter values to the control unit (50), and
wherein the control unit (50) is further configured to control the common rail system (34) based on the measured parameter values in order to adjust the timing of the shifted-pilot injection (140, 140', 140") for improving the quality of the combustion process.

15. A method for operating a dual fuel engine (10) configured for operation in a liquid fuel mode and for operation in a gaseous fuel mode and having a pilot injector (42) for initiating the combustion process of the gaseous fuel mode, the method comprising:
cleaning the pilot injector (42) during operation of the dual fuel engine (10) in the liquid fuel mode by performing a switched-pilot injection (140) that begins at the end or after a main liquid fuel injection (130).
